# EUROPÄISCHE PATENTSCHRIFT

(11) **EP 1 450 127 B1**
(45) Veröffentlichungstag und Bekanntmachung des Hinweises auf die Patenterteilung: **03.11.2010**
(21) Anmeldenummer: 04000566.2
(22) Anmeldetag: 14.01.2004
(51) Int. Cl.: G01B 15/02, G01N 23/223

(54) **Verfahren und Vorrichtung zur Bestimmung der Dicke des Isolation eines Flachkabels**
Method and device to measure the thickness of the isolation in flat cables
Procédé et dispositif pour mesurer l'épaisseur de l'isolation d'un câble plat

(30) Priorität: 21.02.2003 DE 10307356
(43) Veröffentlichungstag der Anmeldung: 25.08.2004
(73) Patentinhaber: SIKORA AG, 28307 Bremen (DE)
(72) Erfinder: Sikora, Harald, 28357 Bremen (DE)
(74) Vertreter: Hauck Patent- und Rechtsanwälte

(56) Entgegenhaltungen:
- EP-A- 0 227 350
- DE-A1- 10 034 747
- US-B1- 6 429 944
- PATENT ABSTRACTS OF JAPAN Bd. 1995, Nr. 08, 29. September 1995 (1995-09-29) -& JP 07 128042 A (HITACHI ZOSEN CORP), 19. Mai 1995 (1995-05-19)
- PATENT ABSTRACTS OF JAPAN Bd. 006, Nr. 206 (P-149), 19. Oktober 1982 (1982-10-19) & JP 57 113313 A (SUMITOMO KEIKINZOKU KOGYO KK), 14. Juli 1982 (1982-07-14)

## Beschreibung

Die Erfindung bezieht sich auf ein Verfahren zur Bestimmung der Dicke der Isolation eines Flachkabels im Bereich der metallischen Leiterbahnen und der Lage der Leiterbahnen nach dem Oberbegriff des Patentanspruchs 1.

Insbesondere in der Automobilindustrie kommen zunehmend Flachleitungen bzw. Flachkabel zur Anwendung. Flachkabel weisen eine Mehrzahl von strangförmigen Flachleiterbahnen auf, die in geringem Abstand nebeneinander angeordnet und in Isoliermaterial eingebettet sind. Die Breite der einzelnen Leiterbahnen variiert je nach Verwendung erheblich, z.B. von 0,5 bis 20 mm. Die Dicke der Leiterbahnen ist annähernd gleich und liegt typisch bei 0,2 mm. Die Gesamtdicke des Flachkabels ergibt sich aus der Dicke der Flachleiter und der auf beiden Seiten aufgetragenen Isolierschichten. Eine typische Dicke der Isolierschichten beträgt 0,15 mm. Die Gesamtdicke des Flachkabels liegt daher bei etwa 0,5 mm.

Derartige Flachkabel haben den Vorteil, daß mit diesen eine automatische Konfektion erfolgen kann, d.h. eine automatische Kontaktierung mit anderen Leitungen, Steckern oder dergleichen. Hierfür ist jedoch unerläßlich, daß die Leiterbahnen eine präzise Positionierung innerhalb der Isolationshülle aufweisen. Für den Anwender ist jedoch ebenfalls wichtig zu wissen, ob die Dicke der Isolationsschichten, insbesondere oberhalb und unterhalb der Leiterbahnen einen vorgegebenen Wert aufweisen.

Aus DE 100 34 747 A1 und auch aus JP 07128042 A ist ein Verfahren zur Messung von Schichtdicken bekannt geworden. In dem erstgenannten Dokument erfolgt die

Messung der Dicke einer Zinkschicht auf einem Stahlträger. Mit Hilfe einer Röntgenstrahlung wird die Stahlträgerschicht zur Fluoreszenzstrahlung angeregt. Durch Messung der Absorption der emittierten Fluoreszenzstrahlung wird die Dicke der Zinkschicht bestimmt. Die Messung geschieht zum Zwecke der Regelung der Auftragdicke der Zinkschicht. Ein ähnliches Verfahren ist auch in JP 57113313 A offenbart.

In EP-A-0 227 350 wird ein Verfahren zur Messung der Leiter in Flachkabeln offenbart, wobei mit Hilfe eines Röntgendetektors die Schattenlage der Leiterbahnen im Flachkabel ermittelt wird. Aus US 6 429 944 B 1 ist ein Verfahren zum Messen des Querschnittsprofils eines Materialstreifens bekannt, wobei eine Strahlungsquelle auf einer Seite der Vorrichtung angeordnet ist, und eine Reihe von Detektoren befindet sich auf der gegenüberliegenden Seite des Streifens. Strahlungsquelle und Detektoren werden gemeinsam quer zur Längserstreckung des Streifens bewegt.

Der Erfindung liegt daher die Aufgabe zugrunde, ein Verfahren und eine Vorrichtung zur Bestimmung der Dicke der Isolation eines Flachkabels im Bereich der metallischen Leiterbahnen anzugeben. Darüber hinaus soll mit Hilfe des erfindungsgemäßen Verfahrens eine Positionsbestimmung der Leiterbahnen innerhalb der Isolation des Flachkabels möglich sein.

Diese Aufgabe wird durch die Merkmale des Patentanspruchs 1 gelöst.

Bei dem erfindungsgemäßen Verfahren wird eine Seite des Flachkabels mittels eines Röntgenstrahls bestrahlt, und auf der gleichen Seite des Flachkabels und/oder auf der gegenüberliegenden ist ein Detektor angeordnet, der für die von der Leiterbahn ausgehenden Röntgenlumineszenzstrahlung empfindlich ist und die Intensität der Röntgenlumineszenzstrahlung mißt. Eine Abschirmung sorgt dafür, daß auf den Detektor keine primäre Röntgenstrahlung auftrifft. Um eine möglichst hohe Ortsauflösung zu erzielen, ist die Ausdehnung der Auftreffläche des Röntgenstrahls auf dem Flachkabel in Querrichtung klein zu machen. Hierzu ist vorzugsweise ein Kollimator vorgesehen oder eine Vorrichtung zur Bündelung des Röntgenstrahls. Beide Vorkehrungen sind in der Röntgentechnik an sich bekannte Maßnahmen.

Bei der mehr oder weniger intensiven Bestrahlung der Leiterbahnen des Flachkabels mit einer Röntgenstrahlung mittlerer Energie, z.B. 35 bis 100 keV, entsteht in den metallischen Leiterbahnen eine Sekundärstrahlung in einem niedrigeren Energieband. Diese Strahlung wird als Röntgenlumineszenzstrahlung bezeichnet. Sie liegt bei Kupferleitern im wesentlichen bei 8 keV. Die Röntgenlumineszenzstrahlung dringt durch die Isolationsschicht und wird vom Detektor empfangen. Obwohl die Isolationsschicht relativ dünn ist, erfährt die Sekundärstrahlung eine merkliche Abschwächung. Diese Abschwächung ist ein Maß für die Wanddicke der Isolation und kann, wenn die spezifischen Absorptionswerte des Isolationsmaterials für die Lumineszenzstrahlung bekannt sind, direkt in ein Längenmaß für die Wanddicke umgerechnet werden.

Mit Hilfe der beschriebenen Anordnung ist es auch möglich, die Unterschiede zwischen den Leiterbahnen und der Isolation zu messen. Während von den Leiterbahnen die erwähnte Lumineszenzstrahlung ausgeht und vom Detektor gemessen wird, ist im Bereich der reinen Isolation zwischen den benachbarten Leiterbahnen keine solche Sekundärstrahlung festzustellen. Man kann daher mit dem beschriebenen Meßverfahren auch die seitlichen Positionen der Leiterbahnen bestimmen. Mit Hilfe der Erfindung kann auch die Kantenposition der Leiterbahnen festgestellt werden. Dies erfolgt mit Hilfe eines Röntgendetektors für die Primärstrahlung, der auf der der Röntgenquelle gegenüberliegenden Seite des Flachkabels angeordnet ist. Naturgemäß ändert sich die Intensität der empfangenen Röntgenstrahlung in Abhängigkeit davon, ob die Strahlung das Flachkabel im Bereich der Leiterbahnen oder im Bereich der Isolierung durchdringt. Auf diese Weise ist es ohne weiteres möglich, festzustellen, an welcher Stelle die Leiterbahnen im Verhältnis zur Breitendimension des Flachkabels angeordnet sind. Mit Hilfe einer derartigen Anordnung ist es auch möglich, die Gesamtdicke des Flachkabels zu ermitteln. Die Differenz zwischen der gemessenen Intensität im Bereich außerhalb des Flachkabels und im Bereich der Isolation ist ein Maß für die Gesamtdicke des Flachkabels. Darüber hinaus kann festgestellt werden, ob die Isolation zwischen benachbarten Leiterbahnen eine verminderte Dicke aufweist, beispielsweise durch Schrumpfung "eingeschnürt" ist.

Es sind verschiedene Anordnungen denkbar, das erfindungsgemäße Verfahren durchzuführen. Erfindungsgemäß besteht gemäß Anspruch 9 eine darin, die Erstreckung der Auftreffläche des Röntgenstrahls auf das Flachkabel quer zu diesem klein zu halten im Verhältnis zur Breite der Leiterbahnen. Zwischen dem Röntgenstrahl und dem Flachkabel wird eine Relativbewegung erzeugt, wodurch der Röntgenstrahl nach und nach die gesamte Breite des Flachkabels überstreicht. Die Empfangsfläche des Detektors wird relativ groß ausgeführt wegen der relativ geringen Intensität der Lumineszenzstrahlung. Auf die Empfangsfläche trifft jedoch nur diejenige Strahlung, die durch den engen Röntgenstrahl erzeugt wird. Es ist zwar denkbar, die Röntgenquelle stationär zu halten und das Flachkabel quer zum Röntgenstrahl zu bewegen, vorzuziehen ist eine Bewegung der Röntgenquelle bzw. des Röntgenstrahls bei quasi stationärer Anordnung des Flachkabels in Querrichtung. Es versteht sich, daß dabei das Flachkabel in Längsrichtung vorbewegt werden kann.

Um einerseits eine hohe Auflösung zu erhalten, andererseits dem Detektor ausreichende Energie der Sekundärstrahlung zukommen zu lassen, ist bei der Erfindung die Ausdehnung des Röntgenstrahls in Längsrichtung des Flachkabels ein deutlich höheres Maß hat als quer dazu.

Die Position der Leiterbahnen bezieht sich naturgemäß auf die Seitenkante des Flachkabels. Mit Hilfe der Erfindung kann auch die Seitenkante ermittelt werden, um auf diese bezogen, die übrigen Positionen der Leiterbahnen und der Abschnitte zwischen den Leiterbahnen zu ermitteln. Es kann vorteilhaft sein, einen separaten Kantendetektor vorzusehen, mit dessen Hilfe die Seitenkanten eines Flachkabels präzise bestimmt werden können. Hierzu kann eine einfache optische Anordnung verwendet werden. Ein derartiger Kantendetektor erlaubt auch Seitenbewegungen des Flachkabels während der Messung zu kompensieren, die sonst zu Meßfehlern führen würden.

Wird das Flachkabel mit einem punktartigen oder mit einem in Längsrichtung des Flachkabels linienartigen Röntgenstrahl bestrahlt, kann, wie schon erwähnt, die Empfangsfläche des Detektors für die Röntgenlumineszenzstrahlung groß ausgebildet sein. Es ist jedoch alternativ möglich, einen relativ großflächigen Röntgenstrahl auf das Flachkabel zu richten, und dabei das Gesichtsfeld des Empfangsdetektors klein zu halten, d.h. die Möglichkeit zu schaffen, daß der Detektor nur punktförmig bzw. linienförmig das Flachkabel quer zur Laufrichtung abtastet. In einem solchen Fall kann der Röntgendetektor zur Positionsbestimmung der Leiterbahnen als Zeilendetektor ausgebildet sein.

Die erfindungsgemäße Vorrichtung zur Durchführung des erfindungsgemäßen Verfahrens sieht gemäß Anspruch 9 eine Röntgenquelle vor, die an einem geeigneten Halter angebracht ist. An dem gleichen Halter kann auch der Röntgenlumineszenzdetektor angebracht werden; es ist eine Anordnung vorgesehen derart, daß der Halter quer zur Längserstreckung bzw. Bewegungsrichtung des Flachkabels bewegt werden kann, um das Flachkabel abzutasten. Auf der gegenüberliegenden Seite ist ein Röntgendetektor vorgesehen, der synchron mitbewegt wird., Er kann aus einem oder mehreren punktförmigen Empfängern besteht. Ist der Röntgendetektor hingegen als Zeilendetektor ausgebildet, der sich über die Breite des Kabels erstreckt, kann der Zeilendetektor stationär bleiben, wenn die Röntgenquelle zusammen mit dem Lumineszenzdetektor sich quer zur Fortbewegungsrichtung des Kabels bewegt. Wird das Kabel mit der Röntgenstrahlung großflächig bestrahlt, kann auch die Röntgenquelle stationär sein, so daß lediglich der Detektor für die Röntgenlumineszenzstrahlung eine Abtastbewegung quer zum Kabel durchführt.

Befinden sich Röntgenquelle und Röntgenlumineszenzdetektor auf einer Seite des Flachkabels und kann auf der gegenüberliegenden Seite des Flachkabels eine für Röntgenstrahlung undurchdringliche, jedoch anregbare Anordnung vorgesehen, beispielsweise eine Kupferfolie oder dergleichen, können mit einer derartigen Anordnung sowohl die Wanddicke der Isolation oberhalb der Leiterbahnen als auch die gesamte Isolationswanddicke gemessen werden. Die Röntgenstrahlung regt in der Kupferfolie eine Sekundärstrahlung oder Lumineszenzstrahlung an, welche in den Bereichen außerhalb der Leiterbahnen die Isolation durchdringt und abgeschwächt vom Lumineszenzdetektor empfangen wird.

Es versteht sich, daß für die erfindungsgemäße Vorrichtung eine Auswertevorrichtung vorgesehen ist, mit welcher die Meßsignale der Detektoren ausgewertet werden zur Ermittlung der einzelnen Parameter eines Flachkabels.

Die Erfindung soll nachfolgend anhand eines in Zeichnungen dargestellten Ausführungsbeispiels näher erläutert werden.
- Fig. 1: zeigt schematisch perspektivisch eine Vorrichtung zur Durchführung des erfindungsgemäßen Verfahrens,
- Fig. 2: zeigt ein Diagramm einer Röntgentransmissionsmessung eines Flachkabels,
- Fig. 3: zeigt ein Diagramm aus einer Röntgenlumineszenzmessung des Flachkabels nach Fig. 1,
- Fig. 4: zeigt ein Diagramm ähnlich dem nach Fig. 2 mit tatsächlichen Meßwerten,
- Fig. 5: zeigt ein Diagramm ähnlich dem nach Fig. 3 mit tatsächlichen Meßergebnissen,
- Fig. 6: zeigt eine ähnliche Anordnung wie Fig. 1, jedoch in einer abgewandelten Meßanordnung,
- Fig. 7: zeigt ein Diagramm aus einer Röntgenlumineszenzmessung des Flachkabels nach Fig. 6.

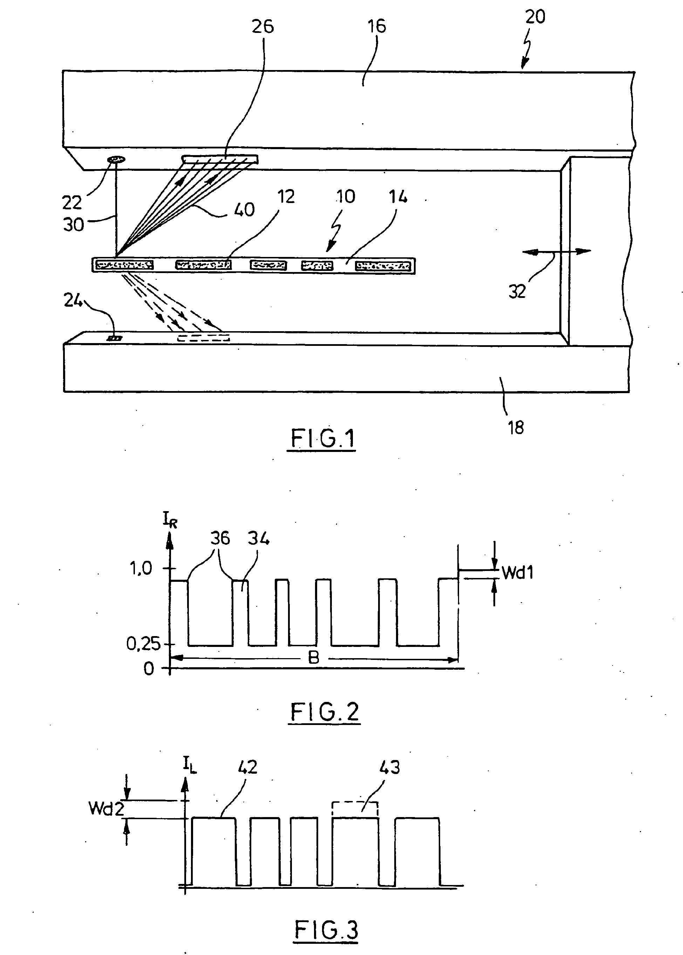

In Fig. 1 ist ein Flachkabel 10 schematisch im Querschnitt dargestellt. Es weist fünf Flachleiterbahnen 12, z.B. aus Kupfer, unterschiedlicher Breite, jedoch gleicher Dicke auf, die in bestimmten Abständen voneinander in einer gemeinsamen Ebene angeordnet sind. Die Anordnung der Flachleiter 12 ist in eine Isolation 14 eingebettet.

Das Flachkabel 10 wird senkrecht zur Zeichenebene in seiner Längsrichtung von einer nicht gezeigten Fördervorrichtung gefördert. Es bewegt sich dabei zwischen Schenkeln 16, 18 eines U-förmigen Halters 20. Im oberen Schenkel 16 ist eine Röntgenquelle 22 angeordnet. Im unteren Schenkel 18 ist der Röntgenquelle 22 gegenüberliegend ein Röntgendetektor 24 angeordnet. Im oberen Schenkel 16 ist im Abstand zur Röntgenquelle ein Röntgenlumineszenzdetektor 26 angeordnet.

Die Röntgenquelle 22 ist nur schematisch angedeutet. Sie erzeugt einen Röntgenstrahl 30, der annähernd senkrecht auf der Ebene des Flachkabels 10 steht. Der Röntgenstrahl 30 hat in Querrichtung des Flachkabels 10 eine sehr geringe Ausdehnung, ist jedoch in Längsrichtung des Flachkabels 12 länglich, so daß sich eine linienartige Auftreffläche auf dem Flachkabel 10 ergibt.

Der Röntgendetektor 24 ist mit einer sehr kleinen Empfangsfläche versehen (linienartig). Es können auch mehrere linienartige Sensoren vorgesehen werden. Die Empfangsfläche des Lumineszenzdetektors 26 ist im Verhältnis dazu relativ groß.

Während der Messung wird der Halter 20 in Richtung des Doppelpfeils 32 von einer nicht gezeigten Antriebsvorrichtung hin und her bewegt, so daß der Röntgenstrahl 30 über die gesamte Breite des Flachkabels 20 traversiert. Diese Traversierbewegung erfolgt fortlaufend hin und her bei konstanter Vorwärtsbewegung des Flachkabels 10.

Die Leiterbahnen 12 bestehen aus Metall, beispielsweise Kupfer. Kupfer hat im Hinblick auf Röntgenstrahlung einen sehr kleinen Transmissionsfaktor. Zwischen den Leiterbahnen 12 befindet sich ausschließlich eine Isolation, die für die Röntgenstrahlung weitgehendst durchlässig ist. Bewegt sich mithin der Röntgenstrahl 30 über die Breite des Flachkabels 10, ergibt sich ein Diagramm nach Fig. 2, in dem die Intensität des empfangenen Röntgenstrahls in Abhängigkeit von der Breite B des Flachkabels 10 aufgetragen ist. Die dabei entstehenden Pulse 34 geben die Intensität in den Abständen zwischen benachbarten Leiterbahnen 12 wieder. Im Bereich der Leiterbahnen 12 findet gemäß Fig. 2 eine relativ hohe Abschirmung statt, die gemessene Intensität ist mithin gering, etwa 25%. Die Kanten 36 der Pulse geben mithin präzise die Lage der Leiterbahnen 12 wieder im Hinblick auf die Seitenkanten des Flachkabels 10. Entspricht der Nullpunkt im Diagramm einer Seitenkante des Flachkabels 10, wird eine Referenz für die Lage der Kanten 36 und damit für die Lage der Leiterbahnen 12 erhalten. Mit Hilfe der beschriebenen Meßvorrichtung kann daher festgestellt werden, ob bei der Herstellung des Flachkabels die Leiterbahnen 12 in der vorgegebenen Position angeordnet sind. Es versteht sich, daß für die Auswertung der Signale des Röntgendetektors 24 eine geeignete Auswertevorrichtung vorzusehen ist, die hier nicht gezeigt ist.

Der Abstand der Pulse 34 vom Intensitätsniveau 100% entspricht der Gesamtdicke wd1 der Isolation zwischen den Leiterbahnen.

Trifft eine Röntgenstrahlung z.B. auf Metall, wird eine Sekundärstrahlung angeregt, die von dem Auftreffort emittiert wird. Dies ist in Fig. 1 bei 40 angedeutet. Die emittierte Strahlung, eine Röntgenlumineszenzstrahlung, liegt auf einem deutlich niedrigeren Energieniveau als der Röntgenstrahl 30. Daher wird die Strahlung 40 in gewissem Maße durch die Isolationsschicht absorbiert, die sich oberhalb der Leiterbahnen 12 befindet. Der Detektor 26 ist mit einer relativ großen Empfangsfläche versehen, um die energieschwächere Strahlung in ein verwertbares Signal umzuwandeln.

In Fig. 3 ist die Intensität dieser Lumineszenzstrahlung über die Breite des Flachkabels 10 aufgetragen. Es ergeben sich Pulse 42 in den Bereichen, in denen eine Leiterbahn 12 liegt und Pulslücken zwischen den Pulsen, in denen reine Isolation zwischen den Leiterbahnen 12 vorliegt, die naturgemäß keine Lumineszenz bewirkt. Der Abstand der Pulse 42 von einem Intensitätsniveau 43 ohne Isolation entspricht der Wanddicke wd2 der Isolation oberhalb einer Leiterbahn.

Es ist denkbar, den Röntgendetektor 24 fortzulassen und nur mit dem Detektor 26 zu arbeiten, wenn neben der Dicke der Isolation oberhalb der Leiterbahnen 12 auch die Position der Leiterbahnen ermittelt werden soll. Es ist jedoch nicht möglich, mit Hilfe einer solchen Anordnung die Dicke des Flachkabels 10 bzw. seiner Isolation zu bestimmen.

Zwischen dem Röntgenstrahl 30 und dem Detektor 26 muß eine Abschirmung vorgesehen werden, welche dafür sorgt, daß keine Röntgenstrahlung auf den Detektor 26 fällt.

Es ist auch möglich, einen weiteren Detektor, entsprechend Detektor 26, am Schenkel 18 anzuordnen, wie dies in Fig. 1 gestrichelt angedeutet ist, denn der Röntgenstrahl 30 erzeugt auch eine Sekundärstrahlung nach Durchdringung des Kupferleiters an dessen unterer Seite, die nach unten in Richtung des Schenkels 18 austritt. Sie ist zwar schwächer als die Strahlung 40, kann jedoch gleichfalls gemessen werden. Damit läßt sich die Dicke der Isolationsschicht auf der Unterseite der Leiterbahnen 12 messen. Der Einfluß der oberen Schicht ist für diesen Detektor vemachlässigbar, weil, wie schon erwähnt, sie für den Röntgenstrahl 30 nahezu durchlässig ist. Naturgemäß kann die Dicke der unteren Isolationsschicht auch durch eine aus einer zweiten Röntgenquelle und einem Lumineszenzstrahlungsdetektor bestehende zweite Meßanordnung bestimmt werden.

Um eine begrenzte Auftreffläche des Röntgenstrahls 30 auf dem Flachkabel 10 zu erzeugen, können geeignete Mittel, wie z.B. ein Kollimator oder eine Vorrichtung zur Bündelung des Röntgenstrahls vorgesehen werden. Wird eine solche Strahlenbegrenzung nicht vorgenommen, ist auch denkbar, zwischen dem Detektor 26 und dem Flachkabel eine Anordnung vorzusehen, welche ermöglicht, daß der Detektor 26 nur jeweils ein Flächenelement auf dem Flachkabel betrachtet, indem ihm eine Blende oder dergleichen vorgeordnet wird.

In Fig. 1 ist der Detektor 26 in relativ großer Erstreckung quer zum Flachkabel 10 dargestellt. Es ist jedoch vorzuziehen, die Haupterstreckung dieses Detektors 26 in Längsrichtung des Flachkabels 10 vorzusehen. Es ist schließlich auch denkbar, mehrere derartige Detektoren für die Röntgenlumineszenz zu verwenden, z.B. in Längsrichtung und in Querrichtung des Flachkabels 10 angeordnet ist.

Es ist auch denkbar, alternativ zum linienförmigen Röntgendetektor 24 eine Detektorzeile vorzusehen mit einer Anzahl von relativ kleinen eng zusammenliegenden Sensorelementen. Eine solcher Detektorzeile wäre dann stationär anzuordnen, während Röntgenquelle und/oder Detektor 26 über das Flachkabel traversieren.

Es wurde erwähnt, daß mit Hilfe etwa des Diagramms nach Fig. 2 die Seitenkanten des Flachkabels 10 genauso ermittelt werden können, wie die Seitenkanten der Leiterbahnen 12. Es ist jedoch im Hinblick auf die Seitenkanten insofern eine Unsicherheit vorhanden, da die Abschwächung des Röntgenstrahls 30 durch die Isolation 14 sehr gering ist. Es kann daher vorteilhaft sein, statt dessen einen zusätzlichen Kantendetektor vorzusehen, der z.B. mit einer optischen Anordnung arbeitet, um eine bessere Referenz bezüglich der Positionsbestimmung der Leiterbahnen 12 zu erhalten.

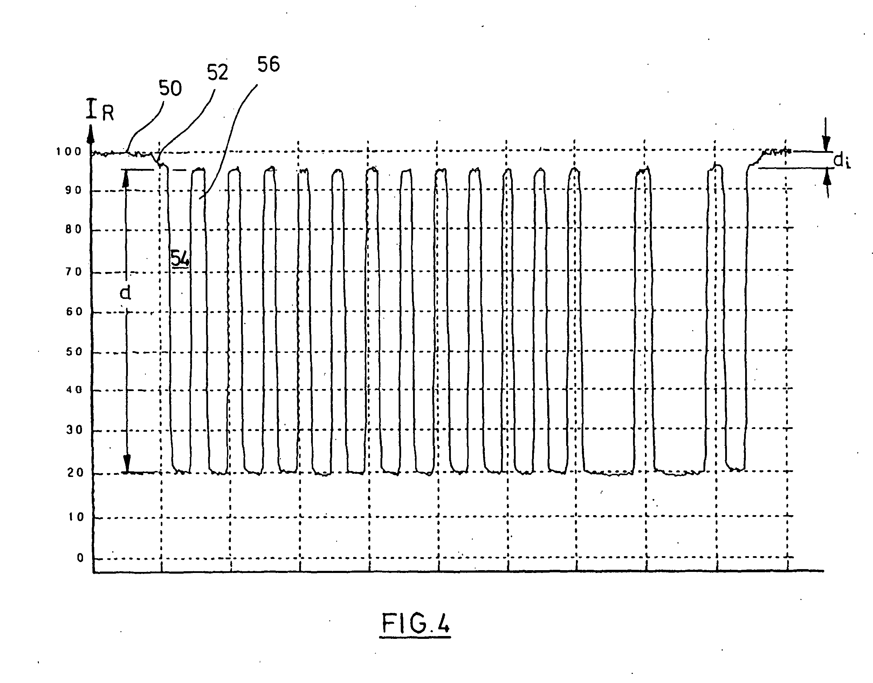

In Fig. 4 ist ein Diagramm wiedergegeben, das die gemessene Intensität der Röntgenstrahlung an der Stelle des Detektors 24 wiedergibt. Insofern besteht grundsätzlich Übereinstimmung mit dem Diagramm nach Fig. 2. Es ist erkennbar, daß ein Flachkabel abgetastet wurde, das eine größere Anzahl von Leiterbahnen aufweist als das Flachkabel 10 nach Fig. 1. Es ist außerdem erkennbar, daß die Intensität der empfangenen Röntgenstrahlung im Bereich reiner Isolation nicht 100% ist und im Bereich der Leiterbahnen auch nicht Null. Ein Einfluß der Isolation der Leiterbahnen ist mithin gleichwohl vorhanden. In dem Bereich 50 des Diagramms nach Fig. 4 befindet sich das Flachkabel außerhalb des Röntgenstrahls. Es tritt im Bereich 52 in den ersten Isolationsabschnitt des Flachkabels ein und wird bei 54 durch die erste Leiterbahn in seiner Intensität auf 20% reduziert. Der nächstfolgende Puls 56 zeigt den Anstieg zwischen benachbarten Leiterbahnen auf eine Intensität von etwa 95%. Die Vorgänge wiederholen sich bei der weiteren Abtastung des nicht gezeigten Flachkabels. In diesem Falle deuten die Abstände zwischen den Pulsen 56 die Abständen zwischen benachbarten Leiterbahnen an, und die Flanken der Pulse definieren die Lage der Leiterbahnen im Hinblick auf die eine Seitenkante, die in Fig. 4 mit 52 definiert ist.

Die Differenz zwischen den Pulsen und den Lücken 54 ergibt einen Intensitätswert d, der ein Maß für die Dicke des Leiters im Flachkabel ist. Es ist daher möglich, mit der beschriebenen Anordnung die Dicke des Leiters zu messen. Der Abstand zwischen der Intensität 100% gemäß 50 in Fig. 4 und den Pulsen 56 entspricht der Dicke di der Isolation. Man erkennt in Fig. 4 außerdem, daß der Pulsverlauf 56 bei den einzelnen Pulsen gezackt ist. Er kann auch einen konkaven Verlauf haben, woraus sich dann ableitet, daß die Abschnitte zwischen den benachbarten Leiterbahnen wegen Materialschrumpfung eingeschnürt sind.

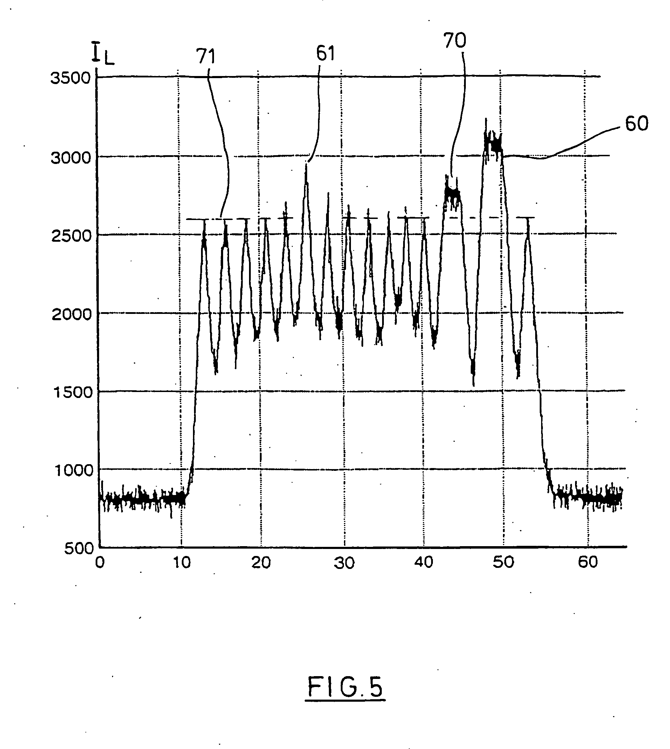

Fig. 5 gibt ein Diagramm wieder für den Verlauf der Röntgenlumineszenzstrahlung bei einer Abtastung des Flachkabels gemäß Fig. 4, die etwa mit dem Detektor 26 nach Fig. 1 gemessen wird. Es ist zu erkennen, daß die einzelnen Pulse nicht exakt auf gleichem Niveau liegen. Dies ist durch ungenügende Bündelung der Röntgenstrahlung verursacht. Im Falle des Pulses 60 bzw. 61 wurde die Isolation über dem Leiter entfernt. Man erkennt mithin deutlich, daß die Intensität der empfangenen Röntgenlumineszenzstrahlung signifikant größer ist als beim Leiter mit vorhandener Isolation, wie bei 71 oder 70 angedeutet. Daher geben die Intensitätswerte der Lumineszenzstrahlung von den Leiterbahnen Aufschluß über die Dicke der darüberliegenden Isolation.

Es kann zweckmäßig sein, in der nicht weiter diskutierten und nicht gezeigten Auswertevorrichtung eine Mehrzahl von Meßwerten, die durch eine Mehrzahl von Abtastvorgängen erzeugt werden, zu ermitteln und so zu behandeln, daß ein mittlerer Wert bestimmt wird, um statistische Schwankungen, Rauschen und Meßungenauigkeiten zu kompensieren.

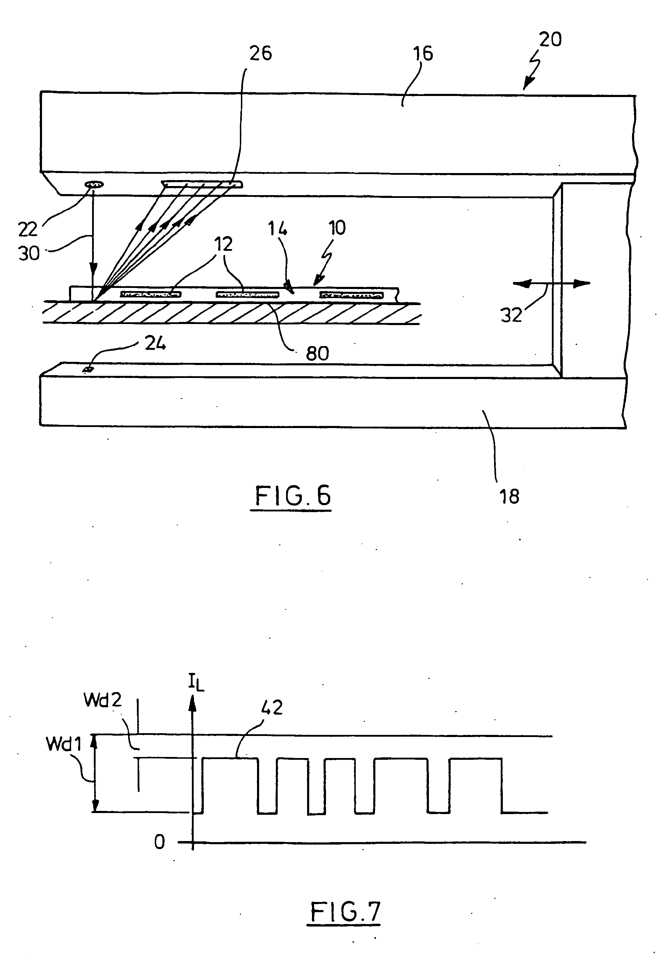

Die Ausführungsform nach Fig. 6 gleicht der nach Fig. 1, daher sind gleiche Teile mit gleichen Bezugszeichen versehen. Unterhalb des Flachkabels 10 ist eine Kupferfolie 80 angeordnet. Sie hat z.B. eine Dicke von 100 µm. Bei der Röntgenbestrahlung des Flachkabels wird zum einen die Kupferfolie 80 geringer Dicke zur Lumineszenzstrahlung angeregt und die Leiterbahnen 12 werden ebenfalls, wie oben beschreiben, zur Lumineszenzstrahlung angeregt. Bei der Abtastung ergibt sich ein Diagramm, wie es in Fig. 7 angedeutet ist. Der Abstand zwischen den Pulsen 12 und einem Empfangspegel ohne Isolation ergibt die Wanddicke der Isolation oberhalb der Leiterbahnen. Der Abstand zwischen den Pulslücken und dem beschriebenen Niveau ergibt die Gesamtdicke der Isolation zwischen den Leiterbahnen 12, die mit wd1 bezeichnet ist.

Ein Röntgendetektor, wie der Detektor 24 nach Fig. 1, ist ebenfalls vorgesehen. Die Folie 80 schwächt die Röntgenstrahlung zwar ab, ihre Intensität unterhalb der Folie 80 reicht aber aus, den Detektor 24 anzuregen, um z.B. die Positionsbestimmung der Leiterbahnen zu bewerkstelligen.

## Patentansprüche

1. Verfahren zur Bestimmung der Dicke der Isolation (14) eines Flachkabels (10) im Bereich der metallischen Leiterbahnen (12) und der Lage der Leiterbahnen (12), **dadurch gekennzeichnet, daß** eine Seite des Flachkabels (10) mittels eines Röntgenstrahls (30) bestrahlt wird und ein Detektor (26) auf der gleichen Seite des Flachkabels (10) die Intensität der von der jeweiligen Leiterbahn (12) abgestrahlten Röntgenlumineszenzstrahlung (40) mißt, wobei der Detektor (26) von dem Röntgenstrahl (30) abgeschirmt wird, wobei die Erstreckung der Auftreffläche des Röntgenstrahls (30) auf dem Flachkabel (10) quer zu diesem klein ist im Verhältnis zur Breite der Leiterbahn (12) und der Isolation (14) zwischen den Leiterbahnen (12) und wobei der Röntgenstrahl (30) quer zur Längsrichtung des Flachkabels (10) über das Flachkabel (10) bewegt wird und mit Hilfe eines Röntgendetektors (24) die Intensität der Röntgenstrahlung auf der gegenüberliegenden Seite des Flachkabels gemessen wird, wodurch die Position der Leiterbahnen (12) im Flachkabel ermittelt wird.

2. Verfahren nach Anspruch 1, **dadurch gekennzeichnet, daß** das Flachkabel (10) in Querrichtung quasi stationär bleibt und der Detektor (26) mit dem Röntgenstrahl (30) bewegt wird.

3. Verfahren nach Anspruch 1 oder 2, **dadurch gekennzeichnet, daß** der Röntgenstrahl (30) quer zum Flachkabel (10) gebündelt oder mittels eines Kollimators in seiner Ausdehnung begrenzt wird.

4. Verfahren nach einem der Ansprüche 1 bis 3, **dadurch gekennzeichnet, daß** die Größe der empfindlichen Fläche des Detektors (26) ein Mehrfaches der Auftrefffläche des Röntgenstrahls (30) auf das Flachkabel (10) ist.

5. Verfahren nach einem der Ansprüche 1 bis 4, **dadurch gekennzeichnet, daß** mit dem Röntgendetektor (24) die Position der Kanten des Flachkabels (10) ermittelt wird.

6. Verfahren nach einem der Ansprüche 1 bis 5, **dadurch gekennzeichnet, daß** die Dicke der Isolation (14) zwischen benachbarten Leiterbahnen (12) bzw. im Kantenbereich des Flachkabels (10) mit Hilfe des Röntgendetektors (24) ermittelt wird.

7. Verfahren nach einem der Ansprüche 1 bis 6, **dadurch gekennzeichnet, daß** die Gesamtdicke des Flachkabels (10) im Bereich der Leiterbahnen (12) ermittelt wird.

8. Verfahren nach einem der Ansprüche 1 bis 7, **dadurch gekennzeichnet, daß** mit Hilfe eines separaten Kantendetektors die Position der Seitenkanten des Flachkabels (10) ermittelt wird.

9. Vorrichtung zur Bestimmung der Dicke der Isolation eines in seiner Längsrichtung geförderten Flachkabels im Bereich metallischer Leiterbahnen und der Lage der Leiterbahnen, **dadurch gekennzeichnet, dass** sie eine Röntgenquelle (22) aufweist, die einen auf das Flachkabel (10) gerichteten Röntgenstrahl (30) erzeugt, wobei die Röntgenquelle (22) Mittel zur Erzeugung eines Röntgenstrahls (30) geringer Ausdehnung in Querrichtung des Flachkabels (10) aufweist, dass sie auf der gleichen Seite des Flachkabels (10) einen für Röntgenlumineszenz empfindlichen Detektor (26) aufweist, der mit einer Auswertevorrichtung für die Auswertung der Intensität der Lumineszenzstrahlung verbunden ist, dass zwischen dem Röntgenstrahl (30) und dem Detektor (26) eine Abschirmung angeordnet ist, dass sie auf der der Röntgenquelle (22) gegenüberliegenden Seite einen Röntgendetektor (24) aufweist, der mit einer Auswertevorrichtung für die Intensität der Röntgenstrahlung ausgebildet ist und dass sie senkrecht zur Längsrichtung des Flachkabels (10) verfahrbar ausgebildet ist.

10. Vorrichtung nach Anspruch 9, **dadurch gekennzeichnet, daß** der für Röntgenlumineszenz empfindliche Detektor (26) auf der gleichen Seite des Flachkabels wie die Röntgenquelle angeordnet ist und auf der gegenüberliegenden Seite des Flachkabels eine metallische Platte oder Folie (80) angeordnet ist.

11. Vorrichtung nach Anspruch 9 oder 10, **dadurch gekennzeichnet, daß** die Mittel von einem Kollimator oder einer Vorrichtung zur Bündelung der Röntgenstrahlung gebildet sind.

12. Vorrichtung nach Anspruch 9 oder 10, **dadurch gekennzeichnet, daß** der Röntgenstrahl so ausgebildet ist, dass er eine größere Fläche des Flachkabels bestrahlt und zwischen dem Flachkabel und dem Detektor Mittel angeordnet sind, durch welche die Empfangsfläche des Detektors in Querrichtung des Flachkabels gesehen, jeweils nur einen schmalen Bereich des Flachkabels betrachtet.

13. Vorrichtung nach Anspruch 11 oder 12, **dadurch gekennzeichnet, daß** Kollimator oder Vorrichtung zur Bündelung so ausgebildet sind, daß die Ausdehnung des Röntgenstrahls (30) in Längsrichtung des Flachkabels (10) um ein Mehrfaches größer ist als quer dazu.

14. Vorrichtung nach einem der Ansprüche 9 bis 13, **dadurch gekennzeichnet, daß** der Röntgendetektor (24) in Abtastrichtung eine punktförmige Empfangsfläche aufweist.

15. Vorrichtung nach Anspruch 14, **dadurch gekennzeichnet, daß** der Röntgendetektor ein Zeilensensor ist.

16. Vorrichtung nach einem der Ansprüche 9 bis 15, **dadurch gekennzeichnet, daß** sie einen separaten Kantendetektor aufweist.

17. Verfahren nach einem der Ansprüche 1-8, **dadurch gekennzeichnet, dass** zusätzlich auf der gegenüberliegenden Seite des Flachkabels die Intensität der von der jeweiligen Leiterbahn abgestrahlten Röntgenlumineszenzstrahlung gemessen wird.

18. Vorrichtung nach einem der Ansprüche 9-16, **dadurch gekennzeichnet, dass** zusätzlich auf der gegenüberliegender Seite des Flachkabels ein für Röntgenlumineszenz empfindlicher Detektor angeordnet ist.

## Claims

1. Method for the determination of the thickness of the insulation (14) of a flat ribbon cable (10) in the region of the metallic conductor paths (12), **characterised in that** one side of the flat ribbon cable (10) is irradiated by means of an x-ray beam (30), and a detector (26) on the same side of the flat ribbon cable (10) measures the intensity of the x-ray luminescence radiation (40) emitted by the respective conductor path (12), the detector (26) being shielded against the x-ray radiation (30), wherein the extension of the area of impingement of the x-ray beam (30) on the flat ribbon cable (10) transversely to the latter is small in relation to the width of the conductor path (12) and the insulation (14) between the conductor paths (12), and wherein the x-ray beam (30) is moved over the flat ribbon cable (10) transversely to the longitudinal direction the flat ribbon cable (10) and the intensity of the x-ray radiation is measured on the opposing side of the flat ribbon cable with the aid of an x-ray detector (24), resulting in the position of the conductor paths (12) in the flat ribbon cable being determined.

2. Method according to claim 1, **characterised in that** the flat ribbon cable (10) remains quasi stationary in the transverse direction, and the detector (26) is moved with the x-ray beam (30).

3. Method according to claim 1 or 2, **characterised in that** the x-ray beam (30) is brought into focus transversely to the flat ribbon cable (10) or is limited in its extension by means of a collimator.

4. Method according to any one of claims 1 to 3, **characterised in that** the size of the sensitive area of the detector (26) is a severalfold of the area of impingement of the x-ray beam (30) on the flat ribbon cable (10).

5. Method according to any one of claims 1 to 4, **characterised in that** the position of the edges of the flat ribbon cable (10) is determined with the x-ray detector (24).

6. Method according to any one of claims 1 to 5, **characterised in that** the thickness of the insulation (14) between adjacent conductor paths (12) and in the edge region of the flat ribbon cable (10), respectively, is determined with the aid of the x-ray detector (24).

7. Method according to any one of claims 1 to 6, **characterised in that** the total thickness of the flat ribbon cable (10) is determined in the region of the conductor paths (12).

8. Method according to any one of claims 1 to 7, **characterised in that** the position of the side edges of the flat ribbon cable (10) is determined with the aid of a separate edge detector.

9. Device for the determination of the thickness of the insulation of a flat ribbon cable conveyed in its longitudinal direction in the region of the metallic conductor paths and the position of the conductor paths, **characterised in that** it comprises an x-ray source (22) producing an x-ray beam (30) directed to the flat ribbon cable (10), wherein the x-ray source (22) comprises means for the generation of an x-ray beam (30) of small extension in the direction transverse to the flat ribbon cable (10), that it comprises a detector (26) sensitive for x-ray luminescence on the same side of the flat ribbon cable (10), said detector being connected with an evaluation equipment for the evaluation of the intensity of the luminescence radiation, that a shielding is provided between the x-ray beam (30) and the detector (26), that it comprises an x-ray detector (24) on the side opposing the x-ray source (22), the x-ray detector (24) being formed with an evaluation equipment for the evaluation of the intensity of the x-ray radiation and that it may be moved transversely to the longitudinal direction of the flat ribbon cable (10).

10. Device according to claim 9, **characterised in that** the detector (26) sensitive for x-ray luminescence is disposed on the same side of the flat ribbon cable as is the x-ray source and that a metallic plate or sheet (80) is disposed on the opposing side of the flat ribbon cable.

11. Device according to claim 9 or 10, **characterised in that** the means are formed by a collimator or an equipment for bringing into focus the x-ray radiation.

12. Device according to claim 9 or 10, **characterised in that** the x-ray beam is designed such that it irradiates a larger area of the flat ribbon cable und that means are disposed between the flat ribbon cable and the detector through which the reception area of the detector, seen in the direction transverse to the flat ribbon cable, views only a small region of the flat ribbon cable at a time.

13. Device according to claim 11 or 12, **characterised in that** the collimator or the equipment for bringing into focus are formed such that the extension of the x-ray beam (30) in the longitudinal direction of the flat ribbon cable (10) is a severalfold larger than transversely to it.

14. Device according to any one of claims 9 to 13, **characterised in that** the x-ray detector (24) has a point-shaped reception area in the scanning direction.

15. Device according to claim 14, **characterised in that** the x-ray detector is a line censor.

16. Device according to any one of claims 9 to 15, **characterised in that** a separate edge detector is provided.

17. Method according to any one of claims 1 to 8, **characterised in that** the intensity of the x-ray luminescence radiation (40) emitted by the respective conductor path (12) is additionally measured on the opposing side of the flat ribbon cable (10).

18. Device according to any one of claims 9 to 16, **characterised in that** a detector (26) sensitive for x-ray luminescence is additionally arranged on the opposing side of the flat ribbon cable (10).

## Revendications

1. Procédé pour déterminer l'épaisseur de l'isolation (14) d'un câble plat (10) dans la région des pistes conductives métalliques (12) et de la position des pistes conductives (12), **caractérisé en ce que** un côté du câble plat (10) est irradié par un rayon X (30), et que un détecteur (26) dans le même côté du câble plat (10) mesure l'intensité (40) de la fluorescence X rayonnée par la piste conductive respective (12), le détecteur (26) étant blindé contre le rayon X (30), l'extension de la surface d'impact du rayon X (30) sur le câble plat (12) transversalement à celui-ci étant petite par rapport à la largeur de la piste conductive (12) et à l'isolation (14) entre les pistes conductives (12), et dans lequel le rayon X est remué à travers le câble plat (10) transversalement à la direction de longueur du câble plat (10), et que l'intensité des rayons X sur le côté opposé du câble plat est mesurée à l'aide d'un détecteur rayons X (24), par quoi la position des pistes conductives (12) dans le câble plat est déterminée.

2. Procédé selon la revendication 1, **caractérisé en ce que** le câble plat (10) reste quasiment stationnaire dans la direction transversale, et que le détecteur (26) est remué avec le rayon X (30).

3. Procédé selon la revendication 1 ou 2, **caractérisé en ce que** le rayon X (30) est focalisé transversalement au câble plat (10), ou limité en son extension à l'aide d'un collimateur.

4. Procédé selon l'une quelconque des revendications 1 à 3, **caractérisé en ce que** la taille de la surface sensitive du détecteur (26) est plusieurs fois la surface d'impact du rayon X (30) sur le câble plat (10).

5. Procédé selon l'une quelconque des revendications 1 à 4, **caractérisé en ce que** la position des arêtes du câble plat (10) est déterminée par le détecteur rayons X (24).

6. Procédé selon l'une quelconque des revendications 1 à 5, **caractérisé en ce que** l'épaisseur de l'isolation (14) entre des pistes conductives (12) adjacentes ou respectivement dans la région d'arête du câble plat (10) est déterminée à l'aide du détecteur rayons X (24).

7. Procédé selon l'une quelconque des revendications 1 à 6, **caractérisé en ce que** l'épaisseur entière du câble plat (10) dans la région des pistes conductives (12) est déterminée.

8. Procédé selon l'une quelconque des revendications 1 à 7, **caractérisé en ce que** la position des arêtes latérales du câble plat (10) est déterminée à l'aide d'un détecteur d'arêtes séparé.

9. Dispositif pour déterminer l'épaisseur de l'isolation d'un câble plat qui est transporté dans la direction de son longueur dans la région de pistes conductives métalliques, et la position des pistes conductives, **caractérisé en ce que** le dispositif a une source de rayons X (22) qui génère un rayon X (30) dirigé vers le câble plat (10), la source de rayons X (22) ayant des moyens pour générer un rayon X (30) d'une petite extension dans la direction transversale du câble plat (10), qu'il présente un détecteur (26) sensible à la fluorescence rayons X dans le même côté du câble plat (10) et qui est relié à un dispositif d'analyse pour l'intensité de la fluorescence, que un blindage est arrangé entre le rayon X (30) et le détecteur (26) , qu'il présente un détecteur (24) pour rayons X dans le côté opposé à la source de rayons X (22) qui est réalisé avec un dispositif d'analyse pour l'intensité des rayons X, et qu'il est réalisé de façon verticalement mobile par rapport à la direction de longueur du câble plat (10).

10. Dispositif selon la revendication 9, **caractérisé en ce que** le détecteur (26) sensible à la fluorescence rayons X est arrangé au même côté du câble plat que la source de rayons X, et que une dalle ou feuille métallique (80) est arrangée sur le côte opposé du câble plat.

11. Dispositif selon la revendication 9 ou 10, **caractérisé en ce que** les moyens sont formés par un collimateur ou par un dispositif pour focaliser le rayonnnement X.

12. Dispositif selon la revendication 9 ou 10, **caractérisé en ce que** le rayon X est formé tellement qu'il irradie une aire assez grande du câble plat et que des moyens sont arrangés entre le câble plat et le détecteur, par lesquels la surface de réception du détecteur, vue dans la direction transversale du câble plat, observe chaque fois seulement une région étroite du câble plat.

13. Dispositif selon la revendication 11 ou 12, **caractérisé en ce que** le collimateur ou le dispositif de focalisation sont faites tellement que l'extension du rayon X (30) dans la direction de longueur du câble plat (10) est plusieurs fois plus grande que dans la direction transversale à cela.

14. Dispositif selon l'une quelconque des revendications 9 à 13, **caractérisé en ce que** le détecteur (24) rayons X présente une surface de réception ponctuelle dans la direction de balayage.

15. Dispositif selon la revendication 14, **caractérisé en ce que** le détecteur rayons X est un capteur de ligne.

16. Dispositif selon l'une quelconque des revendications 9 à 15, **caractérisé en ce qu'**il présente un détecteur d'arête séparé.

17. Procédé selon l'une quelconque des revendications 1 à 8, **caractérisé en ce que** l'intensité de la de la fluorescence X rayonnée par la piste conductive respective est en outre mesurée sur le côté opposé du câble plat.

18. Dispositif selon l'une quelconque des revendications 9 à 16, **caractérisé en ce que** un détecteur sensible pour la fluorescence X est en outre disposé sur le côté opposé du câble plat.
